# EUROPEAN PATENT SPECIFICATION

(11) **EP 3 079 331 B1**
(45) Date of publication and mention of the grant of the patent: **15.11.2017**
(21) Application number: 15162866.6
(22) Date of filing: 08.04.2015
(51) Int. Cl.: H04L 29/06, H04M 3/51, H04W 4/22, H04W 76/00

(54) **METHOD FOR HANDLING AN ECALL-RELATED VOICE CALL BY MOBILE COMMUNICATION NETWORK, MOBILE COMMUNICATION NETWORK, CS-CALL HANDLING ENTITY, PROGRAM AND COMPUTER PROGRAM PRODUCT**
VERFAHREN ZUR HANDHABUNG EINES ECALL-BEZOGENEN SPRACHANRUFS ÜBER EIN MOBILFUNKNETZ, MOBILFUNKNETZ, CSCALL-HANDHABUNGSENTITÄT PROGRAMM UND COMPUTERPROGRAMMPRODUKT
PROCÉDÉ DE MANIPULATION D'UN APPEL VOCAL ASSOCIÉ À UN E-CALL PAR UN RÉSEAU DE COMMUNICATIONS MOBILES, RÉSEAU DE COMMUNICATION MOBILE, ENTITÉ DE GESTION DE CS-CALL, PROGRAMME INFORMATIQUE ET PRODUIT LOGICIEL

(43) Date of publication of application: 12.10.2016
(73) Proprietor: Deutsche Telekom AG, 53113 Bonn (DE)
(72) Inventor: Lauster, Reinhard, 3100 St. Pölten (AT)
(74) Representative: Schwöbel, Thilo K.

(56) References cited:
- US-A1- 2012 195 260
- US-A1- 2013 309 994
- GELLENS QUALCOMM TECHNOLOGIES R ET AL: "Internet Protocol-based In-Vehicle Emergency Calls; draft-ietf-ecrit-car-crash-00.txt", INTERNET PROTOCOL-BASED IN-VEHICLE EMERGENCY CALLS; DRAFT-IETF-ECRIT-CAR-CRASH-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 4 July 2014 (2014-07-04), pages 1-22, XP015100539, [retrieved on 2014-07-04]
- GELLENS QUALCOMM TECHNOLOGIES R ET AL: "Next-Generation Pan-European eCall; draft-ietf-ecrit-ecall-01.txt", NEXT-GENERATION PAN-EUROPEAN ECALL; DRAFT-IETF-ECRIT-ECALL-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 27 October 2014 (2014-10-27), pages 1-35, XP015102711, [retrieved on 2014-10-27]

## Description

### BACKGROUND

The present invention relates to a method for handling an eCall-related voice call by a mobile communication network, wherein the mobile communication network comprises at least one CS-call (circuit switched call) handling entity, wherein the CS-call handling entity receives the eCall-related voice call, especially from a vehicle, the eCall-related voice call comprising voice part data and in-band data information.

Furthermore, the present invention relates to a mobile communication network for for handling an eCall-related voice call, wherein the mobile communication network comprises at least one CS-call handling entity, wherein the CS-call handling entity receives the eCall-related voice call, especially from a vehicle, the eCall-related voice call comprising voice part data and in-band data information.

Additionally, the present invention relates to CS-call handling entity as part of a mobile communication network for handling an eCall-related voice call, the CS-call handling entity especially corresponding to an MSC functionality (Mobile Switching Center functionality), wherein the CS-call handling entity receives the eCall-related voice call, especially from a vehicle, the eCall-related voice call comprising voice part data and in-band data information.

Furthermore, the present invention relates to a program and to a computer program product for handling an eCall-related voice call.

The term "eCall" refers to an interoperable in-vehicle emergency call service which will is realized across the European Union. E.g. in the event of a collision, the intended solution can automatically or manually establish an emergency voice call via the cellular network (mobile communication network) to the local emergency agencies, i.e., the Public-Safety Answering Point (PSAP). Aside from enabling two-way speech communication between the motorist and the PSAP operator, eCall also allows to transfer a data message from the In-Vehicle System (IVS) over the cellular network to the PSAP which is denoted as eCall Minimum Set of Data (MSD). The MSD includes vehicle location information, time stamp information, possibly the number of passengers, Vehicle Identification Number (VIN), and other relevant information, such as vehicle sensor data, e.g. airbag sensor data or acceleration sensor data.

Hence, the eCall functionality is based on a mobile station (or user equipment of a mobile communication network) being built in a vehicle, and on an emergency call being triggered either automatically or manually from that mobile station towards the mobile communication network.

At the moment, the related European Union standard covers only a GSM CS-based eCall, where, besides an origination voice call, all emergency relevant data (place, time and type of accident, etc...) are transported as in-band data of this (voice) call. When operators deploy ICS (IMS (IP (Internet Protocol) Multimedia System) Centralized Service) architecture the MSC server (Mobile Switching Center) and the related media gateway is responsible for converting CS voice calls into PS based IMS calls. The MSC server has to establish SIP-based (Session Initiation Protocol) IMS compliant session setup and the Media gateway the corresponding modification of user data. The eCAll In-band modem data must be identified and it must be guarantee that the responsible PSAP (Public Safety Answering Point) receives these data without errors. This is very complex, because all the involved media gateways must be aware of the in-band data and also currently no standardized indication for a CS eCALL exists. Also a PSAP connected to IMS cannot identify CS eCall with in-band modem data based on SIP signalling information.

IETF Draft publication "Internet Protocol-based In-Vehicle Emergency Calls (GELLENS QUALCOMM TECHNOLOGIES R ET AL: draft-ietf-ecrit-car-crash-00.txt; 4 July 2014) discloses an architecture using an intermediate TSP (telematics access point) between an IVS and a PSAP. The TSP provides an interface between a CS-based IVS and an IMS-based PSAP.

Also, patent publication US2013/309994 A1 (HELLWIG KARL [DE] ET AL; 21 November 2013) dislcoses an eCall architecture, wherein the MSD data can be transmitted from a CS-based IVS to an IMS-based PSAP using a special SMS called eSMS. The eSMS is transmitted via a fast procedure within the cellular access channel signalling. An intermediate MSC can convert MSD data sent by the IVS in an eSMS to data embedded in a SIP message sent to the PSAP.

### SUMMARY

An object of the present invention is to provide a technically simple, effective and especially cost effective solution for handling an eCall-related voice call - especiallc comprising in-band modem data or in-band data information - by a mobile communication network such that problems of transmitting these in-band data information can be as much as possible reduced.

The object of the present invention is achieved by a method, according to independent claim 1, for handling an eCall-related voice call by a mobile communication network, wherein the mobile communication network comprises at least one CS-call (circuit switched call) handling entity, wherein the CS-call handling entity receives the eCall-related voice call, especially from a vehicle, the eCall-related voice call comprising voice part data and in-band data information,
wherein the CS-call handling entity comprises an eCall-gateway functionality and an IMS interface (IP Multimedia System interface), the IMS interface comprising a payload interface part and a signaling interface part, wherein upon an eCall-related voice call, incoming at the CS-call handling entity, the method comprises the following steps:
-- in a first step, the eCall-related voice call is received by the CS-call handling entity,
-- in a second step, the CS eCall emergency call type of the eCall-related voice call is detected,
-- in a third step, subsequent to the second step, the in-band data information of the eCall-related voice call is extracted by the eCall-gateway functionality,
-- in a fourth step, subsequent to the third step, the data of the eCall-related voice call are provided to the IMS interface, wherein the in-band data information is transported using the signaling interface part and the voice part data are transported using the payload interface part.

It is thereby advantageously possible according to the present invention that CS eCalls can be converted, in the mobile communication network, such as to optimize the processing of CS eCalls in a PS (packet switched) based IMS mobile communication network (or home network). This enables a simple and cost-efficient deployment of eCall PSAPs (Public Safety Answering Points) connected to the network operator's IMS network.

The eCall functionality is based on a mobile station (or user equipment of a mobile communication network) being built in a vehicle, and on an emergency call being triggered either automatically or manually from that mobile station towards the mobile communication network. Currently, the related European Union standard only covers mobile originated circuit switched voice eCalls, also called CS based eCalls, where, besides an origination voice call, all emergency relevant data (such as the place, the time and the type of accident, etc...) are transported as in-band data of this voice call. It is expected that GSM (Global System for Mobile communications) CS based eCall needs to be supported by network operators of mobile communication networks for still a comparatively long time. However, new work on a PS/IMS based eCall standard (i.e. an eCall standard based on packet switched technology) are currently starting or in progress.

For a network optimization, especially for reducing costs (such as capital expenditures (CAPEX) and operational expenditures (OPEX)), operators of mobile communication networks are deploying the ICS (IMS (IP (Internet Protocol) Multimedia System) Centralized Service) architecture where all of their service control and interconnection is using the IMS network only. In such an architecture, the MSC (Mobile Switching Center) server and the related Media Gateway is responsible for converting CS (circuit switched) voice calls into PS (packet switched) based IMS calls. Therefore MSC server has to establish SIP-based (Session Initiation Protocol) IMS compliant session setup and the Media Gateway the corresponding modification of user data. In this context, in-band modem data are comparatively difficult to handle and it must be guaranteed that the responsible PSAP (Public Safety Answering Point) receives these data (or information) without errors.

According to the present invention, it is advantageously possible that such problems are solved, i.e. it can be guaranteed that the in-band modem data are received at the responsible PSAP (Public Safety Answering Point) in the correct manner, i.e. without errors, due to either a new network node or a new function of an existing network node of the mobile communication network.

According to the present invention, such a new network node or new function is especially located near or in the vicinity or integrated with a CS-call handling entity such as an MSC server (Mobile Switching Center) and/or a Media gateway in the mobile communication network of the respective operator, in order to extract the in-band data of a CS eCall. These transparent (in-band) data or in-band data information can be put into the SIP signaling related to the corresponding eCall voice part towards the IMS network to the related PSAP (which is responsible for decoding and signaling).

Additionally, the new function provided according to the present invention or new network node is able to terminate the in-band data session and decode the eCALL information and send the related information as user readable text using the SIP signaling related to the corresponding eCall voice part towards the IMS network to the PSAP.

According to the present invention, it is advantageously possible for operators of mobile communication networks to deploy ICS architecture without the quite costly need of supporting a CS connection to PSAPs responsible for CS eCall-related voice calls. Therefore, there is no need to support difficult configurations for forwarding CS eCAll in-band data through the IMS networks to the responsible PSAPs. The PSAPs can be connected to the IMS network and there is no need to distinguish between CS eCall and a future PS (packet switched) based IMS eCall at the connection to the IMS network which is more cost efficient for PSAP deployment. The decoded eCall information (i.e. the MSD as part of the in-band data information) which is sent to the corresponding PSAPs can be of various formats, especially it is possible to provide this information in a format which is compliant with European Union requirements. Thereby, it is advantageously possible that interoperability with a future EU defined PS based eCall service can be guaranteed.

Furthermore according to the present invention, it is optionally advantageously possible that the related SIP signaling includes an indication that the SIP session is related to a CS eCall. This enables the network operator of the mobile communication network to deploy without restrictions ICS architecture where all PSAPs are connected to IMS network only. It is advantageously possible according to the present invention that by avoiding an optimization of the IMS network to transport CS eCall in-band data (or in-band modem data) both OPEX costs and CAPEX costs can be saved.

Additionally, it is advantageously possible according to the present invention, that PSAPs can easily handle CS eCalls and future PS (packet switched) based eCalls whit the same methods.

According to the present invention, an eCall-related voice call, especially from a vehicle, is received by an CS-call handling entity of the mobile communication network. The eCall-related voice call comprises a voice part data and additionally in-band data information. The CS-call handling entity comprises an eCall-gateway functionality and an IMS interface (IP Multimedia System interface), the IMS interface comprising a payload interface part and a signaling interface part. Upon an incoming eCall-related voice call, received at the CS-call handling entity, the eCall-related voice call is first received by the CS-call handling entity, and the type of the eCall is detected, i.e. the CS eCall emergency call type of the eCall-related voice call is detected. After reception of the eCall-related voice call and detection of the eCall type, the in-band data information of the eCall-related voice call is extracted by the eCall-gateway functionality, and furthermore, the data of the eCall-related voice call are provided to the IMS interface, wherein the in-band data information is transported using the signaling interface part and the voice part data are transported using the payload interface part. Thereby, it is advantageously possible to realize an early extraction, and hence possibly an early separation, of the in-band data (or in-band data information) from the residual parts, i.e. the other voice parts of the eCall-related voice call, such that the in-band data information need not be transported through the mobile communication network towards the PSAP in the form of voice data packets, but are extracted from the voice part of the incoming eCall-related voice call at an early stage in the processing of the incoming eCall-related voice call.

According to a preferred embodiment of the present invention, the CS-call handling entity is an MSC entity of the mobile communication network.

Thereby, it is advantageously possible to realize the advantages according to the present invention without increased additional costs.

According to the present invention it is furthermore preferred that dependent on the detected CS eCall emergency call type, a different URN (Uniform Resource Name) is transmitted using the signaling interface part.

It is thereby advantageously possible that the type of the eCall-related voice call does even not need to be detected by the PSAP but - by means of routing rules routing the eCall-related voice call to, e.g., different interfaces of the PSAP (Public Safety Answering Point) dependent on the different URNs (Uniform Resource Names) - it is possible to indicate the type of the CS eCall emergency call by means of the URN such that by simple routing the incoming eCall-related voice call is treated in the correct and intended manner.

It is possible and preferred according to the present invention that the in-band data information corresponds to the minimum set of data (MSD) of the eCall-related voice call, comprising position information of the vehicle and/or a time stamp information and/or a vehicle identification number of the vehicle and/or vehicle sensor data and/or a type of accident information.

It is thereby advantageously possible to provide the relevant data to the PSAP in charge of handling the respective eCall-related voice call in a reliable manner.

According to the present invention it is preferred that the in-band data information is transmitted, via the IMS interface and using related SIP (Session Initiation Protocol) signaling on the signaling interface part, as transparent data towards an IMS network.

It is thereby advantageously possible to reliably transmit the in-band data information (or in-band modem data) to the relevant PSAP, independent on how many intermediate network nodes or gateway nodes are present in the mobile communication network (or plurality of mobile communication networks) between the reception node of the eCall-related voice call and the PSAP.

According to a preferred embodiment of the present invention, the in-band data information and the voice part data are transmitted as part of the same voice over IP session, wherein especially the in-band data information is transmitted as part of an SIP invite message and/or as part of a SIP info message, and especially according to a packet switched eCall standard, wherein the in-band data information is especially transmitted using a SIP signaling indication indicating that the originating eCall-related voice call is of a CS eCall emergency call type.

By means of transmitting the in-band data information and the voice part data as part of the same voice over IP session, it is advantageously possible to assure that the voice part data and the in-band data information are not separated and are received by the PSAP correctly, i.e. either at the same time of at least in a comparatively tight temporal relationship such that a correct handling of the eCall-related voice call is possible at the PSAP.

In this respect, it is advantageously possible according to the present invention that the in-band data information is transmitted as part of an SIP invite message and/or as part of a SIP info message. However, other types of messages can alternatively also be used to transport the in-band data information.

Furthermore, the in-band data information are advantageously transmitted according to a packet switched eCall standard, wherein the in-band data information is especially transmitted using a SIP signaling indication indicating that the originating eCall-related voice call is of a CS eCall emergency call type.

According to a further preferred embodiment of the present invention, the incoming eCall-related voice call is terminated by the CS-call handling entity, and wherein especially the incoming eCall-related voice call is terminated, the in-band data information extracted and decoded by the eCall-gateway functionality, wherein especially the extracted and decoded in-band data information is human readable text (clear text).

Thereby, it is advantageously possible to provide the in-band data information to the PSAP such that it can be processed in a comparatively easy manner.

According to a further preferred embodiment of the present invention, the eCall-related voice call is directed to a public safety answering point, the public safety answering point comprising a further IMS interface.

Thereby, it is advantageously possible that both the CS-call handling entity and the PSAP uses the same interface towards the mobile communication network, and that the in-band data information are transported - either exclusively or at least additionally - using the signaling interface part of the IMS interface.

Furthermore, the present invention relates to a mobile communication network, according to independent claim 7, for handling an eCall-related voice call, wherein the mobile communication network comprises at least one CS-call (circuit switched call) handling entity, wherein the CS-call handling entity receives the eCall-related voice call, especially from a vehicle, the eCall-related voice call comprising voice part data and in-band data information, wherein the CS-call handling entity comprises an eCall-gateway functionality and an IMS interface (IP Multimedia System interface), the IMS interface comprising a payload interface part and a signaling interface part, wherein the mobile communication network is configured such that upon an eCall-related voice call, incoming at the CS-call handling entity:
-- the eCall-related voice call is received by the CS-call handling entity,
-- the CS eCall emergency call type of the eCall-related voice call is detected,
-- the in-band data information of the eCall-related voice call is extracted by the eCall-gateway functionality,
-- the data of the eCall-related voice call are provided to the IMS interface, wherein the in-band data information is transported using the signaling interface part and the voice part data are transported using the payload interface part.

Thereby, it is advantageously possible to provide a mobile communication network such that CS eCalls can be converted, in the mobile communication network, such as to optimize the processing of CS eCalls in a PS (packet switched) based IMS mobile communication networks which enables a cost-efficient deployment of eCall PSAPs (Public Safety Answering Points) connected to IMS based mobile communication network.

According to still a further preferred embodiment of the present invention - especially with respect to the inventive mobile communication network -, the mobile communication network is configured such that the in-band data information is transmitted, via the IMS interface and using related SIP (Session Initiation Protocol) signaling on the signaling interface part, as transparent data towards an IMS network.

Thereby, it is advantageously possible according to the present invention to reliably transmit the in-band data information (or in-band modem data) to the relevant PSAP, independent on how many intermediate network nodes or gateway nodes are present in the mobile communication network (or plurality of mobile communication networks) between the reception node of the eCall-related voice call and the PSAP.

According to still a further preferred embodiment of the present invention - especially with respect to the inventive mobile communication network -, the mobile communication network is configured such that the in-band data information and the voice part data are transmitted as part of the same voice over IP session, wherein especially the in-band data information is transmitted as part of an SIP invite message and/or as part of a SIP info message, and especially according to a packet switched eCall standard, wherein the in-band data information is especially transmitted using a SIP signaling indication indicating that the originating eCall-related voice call is of a CS eCall emergency call type.

By means of transmitting the in-band data information and the voice part data as part of the same voice over IP session, it is advantageously possible to assure that the voice part data and the in-band data information are not separated and are received by the PSAP correctly.

Furthermore, the present invention relates to a CS-call handling entity, according to independent claim 9, as part of a mobile communication network for handling an eCall-related voice call, the CS-call handling entity especially corresponding to an MSC functionality (Mobile Switching Center functionality), wherein the CS-call handling entity receives the eCall-related voice call, especially from a vehicle, the eCall-related voice call comprising voice part data and in-band data information,
wherein the CS-call handling entity comprises an eCall-gateway functionality and an IMS interface (IP Multimedia System interface), the IMS interface comprising a payload interface part and a signaling interface part, wherein the CS-call handling entity is configured such that upon an eCall-related voice call, incoming at the CS-call handling entity:
-- the eCall-related voice call is received by the CS-call handling entity,
-- the CS eCall emergency call type of the eCall-related voice call is detected,
-- the in-band data information of the eCall-related voice call is extracted by the eCall-gateway functionality,
-- the data of the eCall-related voice call are provided to the IMS interface, wherein the in-band data information is transported using the signaling interface part and the voice part data are transported using the payload interface part.

Thereby, it is advantageously possible to provide a mobile communication network such that CS eCalls can be converted, in the mobile communication network, such as to optimize the processing of CS eCalls in a PS (packet switched) based IMS mobile communication networks.

Additionally, the present invention relates to a program comprising a computer readable program code, according to independent claim 10, which, when executed on a computer and/or on a CS-call handling entity or a network node of a mobile communication network, or in part on a CS-call handling entity and/or in part on a network node of a mobile communication network, causes the computer and/or CS-call handling entity and/or the network node of the mobile communication network to perform the inventive method.

Still additionally, the present invention relates to a computer program product, according to independent claim 11, for handling an eCall-related voice call, the computer program product comprising a computer program stored on a storage medium, the computer program comprising program code which, when executed on a computer and/or on a CS-call handling entity or a network node of a mobile communication network, or in part on a CS-call handling entity and/or in part on a network node of a mobile communication network, causes the computer and/or CS-call handling entity and/or the network node of the mobile communication network to perform the inventive method.

Further embodiments are defined in the dependent claims.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention, which is defined by the appended claims. The reference figures quoted below refer to the attached drawings.

### BRIEF DESCRIPTION OF THE DRAWINGS

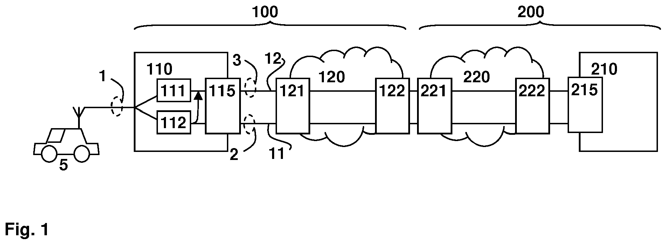

Figure 1 schematically illustrate the processing or the transport of an eCall-related voice call from a vehicle initiating the eCall-related voice call to a PSAP (Public Safety Answering Point), via at least one mobile communication network.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a (first) mobile communication network 100, especially a public land mobile network 100, is schematically shown, the mobile communication network 100 comprising typically an access network (not specifically depicted) and a core network 120. The (first) mobile communication network 100 is preferably a cellular telecommunications network comprising typically a plurality of network cells (or radio cells). In Figure 1, no network cells (or radio cells) are explicitely shown, rather a CS-call handling entity 110 (as part of the access network of the mobile communication network 100) is shown. The (first) mobile communication network 100 typically comprises a plurality of user equipments or telecommunication devices. In the representation of Figure 1, only a vehicle 5 is shown that is equipped with a user equipment or a mobile station, typically built in into the vehicle 5 such that eCall-related voice calls 1 can be initiated - either automatically or manually.

In the exemplary representation of Figure 1, a further mobile communication network 200 (or second mobile communication network 200) is schematically shown, having likewise a core network 220 (and possibly also an access network which is not shown). The further mobile communication network 200 (or second mobile communication network 200) comprises a PSAP (Public Safety Answering Point) 210.

According to European Union regulations, the possibility for the vehicle 5 to initiate an emergency call is or will become mandatory for newly built vehicles 5. According to the functionality of this regulated pan-European in-vehicle emergency call service, an emergency voice call is triggered manually or automatically, e.g., in the event of a collision, via the cellular network (i.e. the (first) mobile communication network 100) to the local emergency agencies 210, i.e., the Public-Safety Answering Point (PSAP) 210.

According to the currently regulated CS based eCall-related voice call, a two-way speech communication between the motorist in the vehicle 5 and the PSAP operator is initiated. Additionally, the regulated eCall functionality allows to transfer a data message from the In-Vehicle System (IVS) of the vehicle 5 over the cellular network (i.e. the (first) mobile communication network 100) to the PSAP 210 which (eCall Minimum Set of Data (MSD)). The MSD typically includes vehicle location information, time stamp information, possibly the number of passengers, Vehicle Identification Number (VIN), and other relevant information, such as vehicle sensor data, e.g. airbag sensor data or acceleration sensor data.

Furthermore, according to the currently regulated CS based eCall-related voice call, the MSD is transmitted using in-band modem transmission, i.e. as part of the voice channel of the established CS (circuit switched) voice call from the vehicle system to the PSAP 210, i.e. the eCall-related voice call 1 comprises - as part of its voice data - also the MSD as in-band modem data. This means that the eCall-related voice call 1 comprises voice part data 2 as well as in-band data information 3.

According to the present invention, the CS-call handling entity 110 receives the eCall-related voice call 1. The CS-call handling entity 110 comprises a server functionality 111 (also called MSC server functionality), an eCall-gateway functionality 112 and an IMS interface (IP Multimedia System interface) 115. The IMS interface 115 comprises a payload interface part 11 and a signaling interface part 12.

When the eCall-related voice call 1 is received at the CS-call handling entity 110, the call type, i.e. the CS eCall emergency call type, of the eCall-related voice call 1 is detected. Furthermore, the in-band data information 3 of the eCall-related voice call 1 is extracted, especially by the eCall-gateway functionality 112. The step of extracting the in-band data information 3 involves a decoding step of the in-band data information, i.e. these information that are formerly part of the voice part of the eCall-related voice call 1 (as analog values) are decoded which results in obtaining the in-band data information 3 in digital form that are able to be transferred to a signaling channel; this is represented in Figure 1 by means of an arrow between the line corresponding to the payload interface part 11 and the line corresponding to the signaling interface part 12 between the eCall-gateway functionality 112 and the IMS interface 115.

As the in-band data information 3 are thus available at the CS-call handling entity 110 in digital form (i.e. extracted from the voice channel of the eCall-related voice call 1), it can be transmitted via a signaling channel of within the (first) mobile communication network 100. According to the present invention, the data of the eCall-related voice call 1 are provided to the IMS interface 115, wherein the in-band data information 3 is transported using the signaling interface part 12 and the voice part data are transported using the payload interface part 11. The data of the eCall-related voice call 1 are then provided to the core network 120 of the (first) mobile communication network 100. The core network 120 comprises a first IMS gateway 121 (of the core network 120) and a second IMS gateway 122 (of the core network 120) both IMS gateways having the IMS interface functionality of the IMS interface 115.

In the exemplary situation represented in Figure 1, the mobile communication network receiving the eCall-related voice call 1 is different from the telecommunications network (or mobile communication network) of the PSAP (Public Safety Answering Point) 210. Hence, the further (or second) telecommunications network (or mobile communication network) 200 is represented, comprising a further core network 220, the further core network 220 comprising likewise a first IMS gateway 221 (of the further core network 220) and a second IMS gateway 222 (of the further core network 220), both IMS gateways having the IMS interface functionality of the IMS interface 115. The PSAP 210 comprises a further IMS interface 215 having likewise the IMS interface functionality of the IMS interface 115. Hence, both the CS-call handling entity 110, the intermediate network nodes of the mobile communication network 100 (and possibly further telecommunications networks and/or mobile communication networks 200), and the PSAP 210 uses the same interface towards the (first) mobile communication network 100 and/or towards other mobile communication networks / telecommunications networks 200.

According to the present invention, the in-band data information 3 is transported either exclusively using the signaling interface part 12 of the IMS interface 115 (i.e. the in-band data information is not transported - additionally - using the payload interface part 11. Alternatively according to the present invention, the in-band data information 3 is transported both using the signaling interface part 12 of the IMS interface 115, and - additionally - using the payload interface part 11.

According to an exemplary embodiment, the CS-call handling entity 110 (or the MSC-server 111) detects an incoming CS eCall-related voice call, e.g., based on defined category information transmitted with the voice call. Either a static configuration or an indication to the Media Gateway triggers the inventive functionality, i.e. to extract the CS eCall related data information (i.e. in-band data information 3). The voice part 2 of the CS eCall is converted like any normal call to a PS based IMS voice call which is routed to the responsible PSAP 210.

According to the present invention, the functionality is provided that the extracted eCall data (i.e. in-band data information 3) are decoded and included into the corresponding SIP signalling. This information is sent to the corresponding PSAP 210, e.g., in "clear text" such that it is compliant to European Union requirements.

Advantageously, it is thereby possible according to the present invention to guarantee interoperability with future European Union-regulated PS based eCall-related services.

## Claims

1. Method for handling an emergency call, eCall, related, eCall-related voice call (1) by a mobile communication network (100), wherein the mobile communication network (100) comprises at least one circuit switched, CS, call, CS-call handling entity (110), wherein the CS-call handling entity (110) receives the eCall-related voice call (1), especially from a vehicle (5), the eCall-related voice call (1) comprising voice part data (2) and in-band data information (3),
wherein the CS-call handling entity (110) comprises an eCall-gateway functionality (112) and an Internet Protocol, IP, Multimedia Subsystem, IMS, interface (115), the IMS interface (115) comprising a payload interface part (11) and a signaling interface part (12), wherein upon an eCall-related voice call (1), incoming at the CS-call handling entity (110), the method comprises the following steps:
-- in a first step, the eCall-related voice call (1) is received by the CS-call handling entity (110),
-- in a second step, the CS eCall emergency call type of the eCall-related voice call (1) is detected,
-- in a third step, subsequent to the second step, the in-band data information (3) of the eCall-related voice call (1) is extracted and decoded by the eCall-gateway functionality (112),
-- in a fourth step, subsequent to the third step, the data of the eCall-related voice call (1) are provided to the IMS interface (115), wherein the in-band data information (3) is transported by the IMS interface towards an IMS network using the signaling interface part (12) and the voice part data (2) is transported by the IMS interface towards the IMS network using the payload interface part (11), wherein the incoming eCall-related voice call (1) is terminated by the CS-call handling entity (110), and wherein the in-band data information (3) extracted and decoded by the eCall-gateway functionality (112), is human readable clear text, wherein the in-band data information (3) and the voice part data (2) are transported by the IMS interface towards the IMS network as part of the same voice over IP session, wherein the in-band data information (3) is transported as part of a Session Initiation Protocol, SIP, invite message and/or as part of a SIP info message, and according to a packet switched eCall standard, wherein the in-band data information (3) is transported using a SIP signaling indication indicating that the originating eCall-related voice call (1) is of a CS eCall emergency call type.

2. Method according to claim 1, wherein the CS-call handling entity (110) is a Mobile Switching Centre, MSC, entity of the mobile communication network (100).

3. Method according to one of the preceding claims, wherein dependent on the detected CS eCall emergency call type, a different Uniform Resource Name, URN, is transported using the signaling interface part (12).

4. Method according to one of the preceding claims, wherein the in-band data information (3) corresponds to the minimum set of data, MSD, of the eCall-related voice call (1), comprising position information of the vehicle (5) and/or a time stamp information and/or a vehicle identification number of the vehicle (5) and/or vehicle sensor data and/or a type of accident information.

5. Method according to one of the preceding claims, wherein the in-band data information (3) is transported via the IMS interface (115) and using related SIP signaling on the signaling interface part (12), as transparent data towards an IMS network (120, 220).

6. Method according to one of the preceding claims, wherein the eCall-related voice call (1) is directed to a public safety answering point (210), the public safety answering point (210) comprising a further IMS interface (215).

7. Mobile communication network (100) for handling an emergency call, eCall, related, eCall-related voice call (1), wherein the mobile communication network (100) comprises at least one circuit switched, CS, call, CS-call handling entity (110), wherein the CS-call handling entity (110) receives the eCall-related voice call (1), especially from a vehicle (5), the eCall-related voice call (1) comprising voice part data (2) and in-band data information (3), wherein the CS-call handling entity (110) comprises an eCall-gateway functionality (112) and an Internet Protocol, IP, Multimedia Subsystem, IMS, interface (115), the IMS interface (115) comprising a payload interface part (11) and a signaling interface part (12), wherein the mobile communication network (100) is configured such that upon an eCall-related voice call (1), incoming at the CS-call handling entity (110), the CS-call handling entity is configured to perform the following steps:
-- the eCall-related voice call (1) is received by the CS-call handling entity (110),
-- the CS eCall emergency call type of the eCall-related voice call (1) is detected,
-- the in-band data information (3) of the eCall-related voice call (1) is extracted and decoded by the eCall-gateway functionality (112),
-- the data of the eCall-related voice call (1) are provided to the IMS interface (115), wherein the in-band data information (3) is transported by the IMS interface towards an IMS network using the signaling interface part (12) and the voice part data (2) is transported by the IMS interface towards the IMS network using the payload interface part (11), wherein the incoming eCall-related voice call (1) is terminated by the CS-call handling entity (110), and wherein the in-band data information (3) extracted and decoded by the eCall-gateway functionality (112), is human readable clear text, wherein the in-band data information (3) and the voice part data (2) are transported by the IMS interface towards the IMS network as part of the same voice over IP session, wherein the in-band data information (3) is transported as part of a Session Initiation Protocol, SIP, invite message and/or as part of a SIP info message, and according to a packet switched eCall standard, wherein the in-band data information (3) is transported using a SIP signaling indication indicating that the originating eCall-related voice call (1) is of a CS eCall emergency call type.

8. Mobile communication network (100) according to claim 7, wherein the mobile communication network (100) is configured such that the in-band data information (3) is transported via the IMS interface (115) and using related SIP signaling on the signaling interface part (12), as transparent data towards an IMS network (120, 220).

9. A circuit switched, CS, call, CS-call handling entity (110) as part of a mobile communication network (100) for handling an emergency call, eCall, related, eCall-related voice call (1), the CS-call handling entity (110) corresponding to a Mobile Switching Centre, MSC, functionality wherein the CS-call handling entity (110) receives the eCall-related voice call (1), especially from a vehicle (5), the eCall-related voice call (1) comprising voice part data (2) and in-band data information (3), wherein the CS-call handling entity (110) comprises an eCall-gateway functionality (112) and an Internet Protocol, IP, Multimedia Subsystem, IMS, interface (115), the IMS interface (115) comprising a payload interface part (11) and a signaling interface part (12), wherein upon an eCall-related voice call (1), incoming at the CS-call handling entity (110), the CS-call handling entity is configured to perform the following steps:
-- the eCall-related voice call (1) is received by the CS-call handling entity (110),
-- the CS eCall emergency call type of the eCall-related voice call (1) is detected,
-- the in-band data information (3) of the eCall-related voice call (1) is extracted and decoded by the eCall-gateway functionality (112),
-- the data of the eCall-related voice call (1) are provided to the IMS interface (115), wherein the in-band data information (3) is transported by the IMS interface towards an IMS network using the signaling interface part (12) and the voice part data (2) is transported by the IMS interface towards the IMS network using the payload interface part (11), wherein the incoming eCall-related voice call (1) is terminated by the CS-call handling entity (110), and wherein the in-band data information (3) extracted and decoded by the eCall-gateway functionality (112), is human readable clear text, wherein the in-band data information (3) and the voice part data (2) are transported by the IMS interface towards the IMS network as part of the same voice over IP session, wherein the in-band data information (3) is transported as part of a Session Initiation Protocol, SIP, invite message and/or as part of a SIP info message, and according to a packet switched eCall standard, wherein the in-band data information (3) is transported using a SIP signaling indication indicating that the originating eCall-related voice call (1) is of a CS eCall emergency call type.

10. Program comprising a computer readable program code which, when executed on a computer and/or on a circuit switched , CS, call, CS-call handling entity (110) or a network node of a mobile communication network (100), or in part on a CS-call handling entity (110) and/or in part on a network node of a mobile communication network (100), causes the computer and/or CS-call handling entity (110) and/or the network node of the mobile communication network (100) to perform a method according one of claims 1 to 6.

11. Computer program product for handling an eCall-related voice call (1), the computer program product comprising a computer program stored on a storage medium, the computer program comprising program code which, when executed on a computer and/or on a ciruit switched, CS, call, CS-call handling entity (110) or a network node of a mobile communication network (100), or in part on a CS-call handling entity (110) and/or in part on a network node of a mobile communication network (100), causes the computer and/or CS-call handling entity (110) and/or the network node of the mobile communication network (100) to perform a method according one of claims 1 to 6.

## Patentansprüche

1. Verfahren zum Handhaben eines Notruf (Emergency Call, eCall)-bezogenen (eCall-bezogenen) Sprachrufes (1) durch ein Mobilkommunikationsnetz (100), wobei das Mobilkommunikationsnetz (100) mindestens eine leitungsvermittelte (Circuit Switched, CS) Ruf (CS-Ruf)-Handhabungsentität (110) umfasst, wobei die CS-Ruf-Handhabungsentität (110) den eCall-bezogenen Sprachruf (1) empfängt, insbesondere von einem Fahrzeug (5), wobei der eCall-bezogene Sprachruf (1) Sprachteildaten (2) und Inband-Dateninformationen (3) umfasst, wobei die CS-Ruf-Handhabungsentität (110) eine eCall-Gateway-Funktionalität (112) und eine Internet Protocol (IP)-Multimedia Subsystem (IMS)-Schnittstelle (115) umfasst, wobei die IMS-Schnittstelle (115) einen Nutzdaten-Schnittstellenteil (11) und einen Zeichengabe-Schnittstellenteil (12) umfasst, wobei das Verfahren bei einem in der CS-Ruf-Handhabungsentität (110) ankommenden eCall-bezogenen Sprachruf (1) die folgenden Schritte umfasst:
- in einem ersten Schritt wird der eCall-bezogene Sprachruf (1) durch die CS-Ruf-Handhabungsentität (110) empfangen,
- in einem zweiten Schritt wird der CS-eCall-Notruf-Typ des eCall-bezogenen Sprachrufes (1) detektiert,
- in einem dritten Schritt, im Anschluss an den zweiten Schritt, werden die Inband-Dateninformationen (3) des eCall-bezogenen Sprachrufes (1) durch die eCall-Gateway-Funktionalität (112) extrahiert und decodiert,
- in einem vierten Schritt, im Anschluss an den dritten Schritt, werden die Daten des eCall-bezogenen Sprachrufes (1) an die IMS-Schnittstelle (115) übermittelt, wobei die Inband-Dateninformationen (3) durch die IMS-Schnittstelle zu einem IMS-Netz unter Verwendung des Zeichengabe-Schnittstellenteils (12) transportiert werden und die Sprachteildaten (2) durch die IMS-Schnittstelle zu dem IMS-Netz unter Verwendung des Nutzdaten-Schnittstellenteils (11) transportiert werden, wobei der ankommende eCall-bezogene Sprachruf (1) durch die CS-Ruf-Handhabungsentität (110) terminiert wird, und wobei die Inband-Dateninformationen (3), die durch die eCall-Gateway-Funktionalität (112) extrahiert und decodiert werden, durch eine Person lesbarer Klartext sind, wobei die Inband-Dateninformationen (3) und die Sprachteildaten (2) durch die IMS-Schnittstelle als Teil derselben Voice-over-IP-Sitzung zu dem IMS-Netz transportiert werden, wobei die Inband-Dateninformationen (3) als Teil einer Session Initiation Protocol (SIP) Invite-Nachricht und/oder als Teil einer SIP-Info-Nachricht und gemäß einem paketvermittelten eCall-Standard transportiert werden, wobei die Inband-Dateninformationen (3) unter Verwendung eines SIP-Zeichengabe-Hinweises transportiert werden, der angibt, dass der originierende eCall-bezogene Sprachruf (1) von einem CS-eCall-Notruftyp ist.

2. Verfahren nach Anspruch 1, wobei die CS-Ruf-Handhabungsentität (110) eine Mobilfunkvermittlungs (Mobile Switching Centre, MSC)-Entität des Mobilkommunikationsnetzes (100) ist.

3. Verfahren nach einem der vorangehenden Ansprüche, wobei in Abhängigkeit von dem detektierten CS-eCall-Notruftyp ein anderer Uniform Resource Name (URN) unter Verwendung des Zeichengabe-Schnittstellenteils (12) transportiert wird unter.

4. Verfahren nach einem der vorangehenden Ansprüche, wobei die Inband-Dateninformationen (3) dem Mindestsatz von Daten (Minimum Set of Data, MSD) des eCall-bezogenen Sprachrufes (1) entsprechen, der Positionsinformationen des Fahrzeugs (5) und/oder eine Zeitstempelinformation und/oder eine Fahrzeugidentifikationsnummer des Fahrzeugs (5) und/oder Fahrzeugsensordaten und/oder eine Unfallart-Information umfasst.

5. Verfahren nach einem der vorangehenden Ansprüche, wobei die Inband-Dateninformationen (3) über die IMS-Schnittstelle (115) und unter Verwendung einer zugehörigen SIP-Zeichengabe auf dem Zeichengabe-Schnittstellenteil (12) als transparente Daten zu einem IMS-Netz (120, 220) transportiert werden.

6. Verfahren nach einem der vorangehenden Ansprüche, wobei der eCall-bezogene Sprachruf (1) an einen Public Safety Answering Point (210) gerichtet wird, wobei der Public Safety Answering Point (210) eine weitere IMS-Schnittstelle (215) umfasst.

7. Mobilkommunikationsnetz (100) zum Handhaben eines Notruf (Emergency Call, eCall)-bezogenen (eCall-bezogenen) Sprachrufes (1), wobei das Mobilkommunikationsnetz (100) mindestens eine leitungsvermittelte (Circuit Switched, CS) Ruf (CS-Ruf)-Handhabungsentität (110) umfasst, wobei die CS-Ruf-Handhabungsentität (110) den eCall-bezogenen Sprachruf (1) empfängt, insbesondere von einem Fahrzeug (5), wobei der eCall-bezogene Sprachruf (1) Sprachteildaten (2) und Inband-Dateninformationen (3) umfasst,
wobei die CS-Ruf-Handhabungsentität (110) eine eCall-Gateway-Funktionalität (112) und eine Internet Protocol (IP)-Multimedia Subsystem (IMS)-Schnittstelle (115) umfasst, wobei die IMS-Schnittstelle (115) einen Nutzdaten-Schnittstellenteil (11) und einen Zeichengabe-Schnittstellenteil (12) umfasst, wobei das Mobilkommunikationsnetz (100) so ausgebildet ist, dass bei einem in der CS-Ruf-Handhabungsentität (110) ankommenden eCall-bezogenen Sprachruf (1) die CS-Ruf-Handhabungsentität dafür ausgebildet ist, die folgenden Schritte auszuführen:
- der eCall-bezogene Sprachruf (1) wird durch die CS-Ruf-Handhabungsentität (110) empfangen,
- der CS-eCall-Notruf-Typ des eCall-bezogenen Sprachrufes (1) wird detektiert,
- die Inband-Dateninformationen (3) des eCall-bezogenen Sprachrufes (1) werden durch die eCall-Gateway-Funktionalität (112) extrahiert und decodiert,
- die Daten des eCall-bezogenen Sprachrufes (1) werden an die IMS-Schnittstelle (115) übermittelt, wobei die Inband-Dateninformationen (3) durch die IMS-Schnittstelle zu einem IMS-Netz unter Verwendung des Zeichengabe-Schnittstellenteils (12) transportiert werden und die Sprachteildaten (2) durch die IMS-Schnittstelle zu dem IMS-Netz unter Verwendung des Nutzdaten-Schnittstellenteils (11) transportiert werden, wobei der ankommende eCall-bezogene Sprachruf (1) durch die CS-Ruf-Handhabungsentität (110) terminiert wird, und wobei die Inband-Dateninformationen (3), die durch die eCall-Gateway-Funktionalität (112) extrahiert und decodiert werden, durch eine Person lesbarer Klartext sind, wobei die Inband-Dateninformationen (3) und die Sprachteildaten (2) durch die IMS-Schnittstelle als Teil derselben Voice-over-IP-Sitzung zu dem IMS-Netz transportiert werden, wobei die Inband-Dateninformationen (3) als Teil einer Session Initiation Protocol (SIP) Invite-Nachricht und/oder als Teil einer SIP-Info-Nachricht und gemäß einem paketvermittelten eCall-Standard transportiert werden, wobei die Inband-Dateninformationen (3) unter Verwendung eines SIP-Zeichengabe-Hinweises transportiert werden, der angibt, dass der originierende eCall-bezogene Sprachruf (1) von einem CS-eCall-Notruftyp ist.

8. Mobilkommunikationsnetz (100) nach Anspruch 7, wobei das Mobilkommunikationsnetz (100) so ausgebildet ist, dass die Inband-Dateninformationen (3) über die IMS-Schnittstelle (115) und unter Verwendung einer zugehörigen SIP-Zeichengabe auf dem Zeichengabe-Schnittstellenteil (12) als transparente Daten zu einem IMS-Netz (120, 220) transportiert werden.

9. Leitungsvermittelte (Circuit Switched, CS) Ruf (CS-Ruf)-Handhabungsentität (110) als Teil eines Mobilkommunikationsnetzes (100) zum Handhaben eines Notruf (Emergency Call, eCall)-bezogenen (eCall-bezogenen) Sprachrufes (1), wobei die CS-Ruf-Handhabungsentität (110) einer Mobilfunkvermittlungs (Mobile Switching Centre, MSC)-Funktionalität entspricht, wobei die CS-Ruf-Handhabungsentität (110) den eCall-bezogenen Sprachruf (1) empfängt, insbesondere von einem Fahrzeug (5), wobei der eCall-bezogene Sprachruf (1) Sprachteildaten (2) und Inband-Dateninformationen (3) umfasst, wobei die CS-Ruf-Handhabungsentität (110) eine eCall-Gateway-Funktionalität (112) und eine Internet Protocol (IP)-Multimedia Subsystem (IMS)-Schnittstelle (115) umfasst, wobei die IMS-Schnittstelle (115) einen Nutzdaten-Schnittstellenteil (11) und einen Zeichengabe-Schnittstellenteil (12) umfasst, wobei bei einem in der CS-Ruf-Handhabungsentität (110) ankommenden eCall-bezogenen Sprachruf (1) die CS-Ruf-Handhabungsentität dafür ausgebildet ist, die folgenden Schritte auszuführen:
- der eCall-bezogene Sprachruf (1) wird durch die CS-Ruf-Handhabungsentität (110) empfangen,
- der CS-eCall-Notruf-Typ des eCall-bezogenen Sprachrufes (1) wird detektiert,
- die Inband-Dateninformationen (3) des eCall-bezogenen Sprachrufes (1) werden durch die eCall-Gateway-Funktionalität (112) extrahiert und decodiert,
- die Daten des eCall-bezogenen Sprachrufes (1) werden an die IMS-Schnittstelle (115) übermittelt, wobei die Inband-Dateninformationen (3) durch die IMS-Schnittstelle zu einem IMS-Netz unter Verwendung des Zeichengabe-Schnittstellenteils (12) transportiert werden und die Sprachteildaten (2) durch die IMS-Schnittstelle zu dem IMS-Netz unter Verwendung des Nutzdaten-Schnittstellenteils (11) transportiert werden, wobei der ankommende eCall-bezogene Sprachruf (1) durch die CS-Ruf-Handhabungsentität (110) terminiert wird, und wobei die Inband-Dateninformationen (3), die durch die eCall-Gateway-Funktionalität (112) extrahiert und decodiert werden, durch eine Person lesbarer Klartext sind, wobei die Inband-Dateninformationen (3) und die Sprachteildaten (2) durch die IMS-Schnittstelle als Teil derselben Voice-over-IP-Sitzung zu dem IMS-Netz transportiert werden, wobei die Inband-Dateninformationen (3) als Teil einer Session Initiation Protocol (SIP) Invite-Nachricht und/oder als Teil einer SIP-Info-Nachricht und gemäß einem paketvermittelten eCall-Standard transportiert werden, wobei die Inband-Dateninformationen (3) unter Verwendung eines SIP-Zeichengabe-Hinweises transportiert werden, der angibt, dass der originierende eCall-bezogene Sprachruf (1) von einem CS-eCall-Notruftyp ist.

10. Programm, das einen computerlesbaren Programmcode umfasst, der, wenn er auf einem Computer und/oder in einer leitungsvermittelten (Circuit Switched, CS) Ruf (CS-Ruf)-Handhabungsentität (110) oder einem Netzknoten eines Mobilkommunikationsnetzes (100) oder teilweise in einer CS-Ruf-Handhabungsentität (110) und/oder teilweise in einem Netzknoten eines Mobilkommunikationsnetzes (100) ausgeführt wird, den Computer und/oder die CS-Ruf-Handhabungsentität (110) und/oder den Netzknoten des Mobilkommunikationsnetzes (100) veranlasst, ein Verfahren nach einem der Ansprüche 1 bis 6 auszuführen.

11. Computerprogrammprodukt zum Handhaben eines eCall-bezogenen Sprachrufes (1), wobei das Computerprogrammprodukt ein auf einem Speichermedium gespeichertes Computerprogramm umfasst, wobei das Computerprogramm einen Programmcode umfasst, der, wenn er auf einem Computer und/oder in einer leitungsvermittelten (Circuit Switched, CS) Ruf (CS-Ruf)-Handhabungsentität (110) oder einem Netzknoten eines Mobilkommunikationsnetzes (100) oder teilweise in einer CS-Ruf-Handhabungsentität (110) und/oder teilweise in einem Netzknoten eines Mobilkommunikationsnetzes (100) ausgeführt wird, den Computer und/oder die CS-Ruf-Handhabungsentität (110) und/oder den Netzknoten des Mobilkommunikationsnetzes (100) veranlasst, ein Verfahren nach einem der Ansprüche 1 bis 6 auszuführen.

## Revendications

1. Procédé pour traiter un appel vocal lié à un appel d'urgence, eCall, (1) par un réseau de communication mobile (100), dans lequel le réseau de communication mobile (100) comprend au moins une entité de traitement d'appel à commutation de circuits, CS, (110), dans lequel l'entité de traitement d'appel CS (110) reçoit l'appel vocal lié à un eCall (1), en particulier à partir d'un véhicule (5), l'appel vocal lié à un eCall (1) comprenant des données de partie voix (2) et des informations de données dans la bande (3),
dans lequel l'entité de traitement d'appel CS (110) comprend une fonctionnalité de passerelle eCall (112) et une interface de sous-système multimédia à protocole Internet, IP, IMS, (115), l'interface IMS (115) comprenant une partie d'interface de charge utile (11) et une partie d'interface de signalisation (12), dans lequel, lors d'un appel vocal lié à un eCall (1) entrant au niveau de l'entité de traitement d'appel CS (110), le procédé comprend les étapes suivantes :
- dans une première étape, l'appel vocal lié à un eCall (1) est reçu par l'entité de traitement d'appel CS (110),
- dans une deuxième étape, le type d'appel d'urgence eCall CS de l'appel vocal lié à un eCall (1) est détecté,
- dans une troisième étape, après la deuxième étape, les informations de données dans la bande (3) de l'appel vocal lié à un eCall (1) sont extraites et décodées par la fonctionnalité de passerelle eCall (112),
- dans une quatrième étape, après la troisième étape, les données de l'appel vocal lié à un eCall (1) sont fournies à l'interface IMS (115), dans lequel les informations de données dans la bande (3) sont transportées par l'interface IMS vers un réseau IMS en utilisant la partie d'interface de signalisation (12) et les données de partie voix (2) sont transportées par l'interface IMS vers le réseau IMS en utilisant la partie d'interface de charge utile (11), dans lequel l'appel vocal lié à un eCall entrant (1) est terminé par l'entité de traitement d'appel CS (110), et dans lequel les informations de données dans la bande (3) extraites et décodées par la fonctionnalité de passerelle eCall (112) sont un texte clair lisible par l'homme, dans lequel les informations de données dans la bande (3) et les données de partie voix (2) sont transportées par l'interface IMS vers le réseau IMS dans le cadre d'une même session voix sur IP, dans lequel les informations de données dans la bande (3) sont transportées dans le cadre d'un message d'invite de protocole d'initiation de session, SIP, et/ou dans le cadre d'un message d'information SIP, et selon une norme d'eCall à commutation de paquets, dans lequel les informations de données dans la bande (3) sont transportées en utilisant une indication de signalisation SIP indiquant que l'appel vocal lié à un eCall d'origine (1) est du type appel d'urgence eCall CS.

2. Procédé selon la revendication 1, dans lequel l'entité de traitement d'appel CS (110) est une entité de centre de commutation mobile, MSC, du réseau de communication mobile (100).

3. Procédé selon l'une quelconque des revendications précédentes, dans lequel, en fonction du type d'appel d'urgence eCall CS détecté, un nom de ressource uniforme, URN, différent est transporté en utilisant la partie d'interface de signalisation (12).

4. Procédé selon l'une quelconque des revendications précédentes, dans lequel les informations de données dans la bande (3) correspondent à l'ensemble minimal de données, MSD, de l'appel vocal lié à un eCall (1), comprenant des informations de position du véhicule (5) et/ou des informations d'horodatage et/ou un numéro d'identification de véhicule du véhicule (5) et/ou des données de capteur de véhicule et/ou des informations de type d'accident.

5. Procédé selon l'une quelconque des revendications précédentes, dans lequel les informations de données dans la bande (3) sont transportées par l'intermédiaire de l'interface IMS (115) et en utilisant une signalisation SIP associée sur la partie d'interface de signalisation (12), en tant que données transparentes vers un réseau IMS (120, 220).

6. Procédé selon l'une quelconque des revendications précédentes, dans lequel l'appel vocal lié à un eCall (1) est dirigé vers un point de réponse de sécurité publique (210), le point de réponse de sécurité publique (210) comprenant une autre interface IMS (215).

7. Réseau de communication mobile (100) pour le traitement d'un appel vocal lié à appel d'urgence, eCall, dans lequel le réseau de communication mobile (100) comprend au moins une entité de traitement d'appel à commutation de circuits, CS, (110), dans lequel l'entité de traitement d'appel CS (110) reçoit l'appel vocal lié à un eCall (1), en particulier à partir d'un véhicule (5), l'appel vocal lié à un eCall (1) comprenant des données de partie voix (2) et des informations de données dans la bande (3), dans lequel l'entité de traitement d'appel CS (110) comprend une fonctionnalité de passerelle eCall (112) et une interface de sous-système multimédia à protocole Internet, IP, IMS, (115), l'interface IMS (115) comprenant une partie d'interface de charge utile (11) et une partie d'interface de signalisation (12), dans lequel le réseau de communication mobile (100) est configuré de telle sorte que lors d'un appel vocal lié à un eCall (1) entrant au niveau de l'entité de traitement d'appel CS (110), l'entité de traitement d'appel CS est configurée pour effectuer les étapes suivantes :
- l'appel vocal lié à un eCall (1) est reçu par l'entité de traitement d'appel CS (110),
- le type d'appel d'urgence eCall CS de l'appel vocal lié à un eCall (1) est détecté,
- les informations de données dans la bande (3) de l'appel vocal lié à un eCall (1) sont extraites et décodées par la fonctionnalité de passerelle eCall (112),
- les données de l'appel vocal lié à un eCall (1) sont fournies à l'interface IMS (115), dans lequel les informations de données dans la bande (3) sont transportées par l'interface IMS vers un réseau IMS en utilisant la partie d'interface de signalisation (12) et les données de partie voix (2) sont transportées par l'interface IMS vers le réseau IMS en utilisant la partie d'interface de charge utile (11), dans lequel l'appel vocal lié à un eCall entrant (1) est terminé par l'entité de traitement d'appel CS (110), et dans lequel les informations de données dans la bande (3) extraites et décodées par la fonctionnalité de passerelle eCall (112) sont un texte clair lisible par l'homme, dans lequel les informations de données dans la bande (3) et les données de partie voix (2) sont transportées par l'interface IMS vers le réseau IMS dans le cadre d'une même session voix sur IP, dans lequel les informations de données dans la bande (3) sont transportées dans le cadre d'un message d'invite de protocole d'initiation de session, SIP, et/ou dans le cadre d'un message d'information SIP, et selon une norme d'eCall à commutation de paquets, dans lequel les informations de données dans la bande (3) sont transportées en utilisant une indication de signalisation SIP indiquant que l'appel vocal lié à un eCall d'origine (1) est du type appel d'urgence eCall CS.

8. Réseau de communication mobile (100) selon la revendication 7, dans lequel le réseau de communication mobile (100) est configuré de sorte que les informations de données dans la bande (3) sont transportées par l'intermédiaire de l'interface IMS (115) et en utilisant une signalisation SIP associée sur la partie d'interface de signalisation (12), en tant que données transparentes vers un réseau IMS (120, 220).

9. Entité de traitement d'appel à commutation de circuits, CS, (110) dans le cadre d'un réseau de communication mobile (100) pour traiter un appel vocal lié à un appel d'urgence, eCall (1), l'entité de traitement d'appel CS (110) correspondant à une fonctionnalité de centre de commutation mobile, MSC, dans laquelle l'entité de traitement d'appel CS (110) reçoit l'appel vocal lié à un eCall (1), en particulier à partir d'un véhicule (5), l'appel vocal lié à un eCall (1) comprenant des données de partie voix (2) et des informations de données dans la bande (3), dans laquelle l'entité de traitement d'appel CS (110) comprend une fonctionnalité de passerelle eCall (112) et une interface sous-système multimédia de protocole Internet, IP, IMS, (115), l'interface IMS (115) comprenant une partie d'interface de charge utile (11) et une partie d'interface de signalisation (12), dans laquelle, lors d'un appel vocal lié à un eCall (1) entrant au niveau de l'entité de traitement d'appel CS (110), l'entité de traitement d'appel CS est configurée pour effectuer les étapes suivantes :
- l'appel vocal lié à un eCall (1) est reçu par l'entité de traitement d'appel CS (110),
- le type d'appel d'urgence eCall CS de l'appel vocal lié à un eCall (1) est détecté,
- les informations de données dans la bande (3) de l'appel vocal lié à un eCall (1) sont extraites et décodées par la fonctionnalité de passerelle eCall (112),
- les données de l'appel vocal lié à un eCall (1) sont fournies à l'interface IMS (115), dans lequel les informations de données dans la bande (3) sont transportées par l'interface IMS vers un réseau IMS en utilisant la partie d'interface de signalisation (12) et les données de partie voix (2) sont transportées par l'interface IMS vers le réseau IMS en utilisant la partie d'interface de charge utile (11), dans lequel l'appel vocal lié à un eCall entrant (1) est terminé par l'entité de traitement d'appel CS (110), et dans lequel les informations de données dans la bande (3) extraites et décodées par la fonctionnalité de passerelle eCall (112) sont un texte clair lisible par l'homme, dans lequel les informations de données dans la bande (3) et les données de partie voix (2) sont transportées par l'interface IMS vers le réseau IMS dans le cadre d'une même session voix sur IP, dans lequel les informations de données dans la bande (3) sont transportées dans le cadre d'un message d'invite de protocole d'initiation de session, SIP, et/ou dans le cadre d'un message d'information SIP, et selon une norme d'eCall à commutation de paquets, dans lequel les informations de données dans la bande (3) sont transportées en utilisant une indication de signalisation SIP indiquant que l'appel vocal lié à un eCall d'origine (1) est du type appel d'urgence eCall CS.

10. Programme comprenant un code de programme lisible par ordinateur qui, lorsqu'il est exécuté sur un ordinateur et/ou sur une entité de traitement d'appel à commutation de circuits, CS, (110) ou un noeud de réseau d'un réseau de communication mobile (100), ou en partie sur une entité de traitement d'appel CS (110) et/ou en partie sur un noeud de réseau d'un réseau de communication mobile (100), amène l'entité de traitement d'appel CS (110) et/ou le noeud de réseau du réseau de communication mobile (100) à effectuer un procédé selon l'une des revendications 1 à 6.

11. Produit de programme d'ordinateur pour traiter un appel vocal lié à un eCall (1), le produit de programme d'ordinateur comprenant un programme d'ordinateur stocké sur un support de stockage, le programme d'ordinateur comprenant un code de programme qui, lorsqu'il est exécuté sur un ordinateur et/ou sur une entité de traitement d'appel à commutation de circuits, CS, (110) ou un noeud de réseau d'un réseau de communication mobile (100), ou en partie sur une entité de traitement d'appel CS (110) et/ou en partie sur un noeud de réseau d'un réseau de communication mobile (100), amène l'entité de traitement d'appel CS (110) et/ou le noeud de réseau du réseau de communication mobile (100) à effectuer un procédé selon l'une des revendications 1 à 6.
